# EUROPEAN PATENT SPECIFICATION

(11) **EP 1 236 004 B1**
(45) Date of publication and mention of the grant of the patent: **14.07.2004**
(21) Application number: 00980134.1
(22) Date of filing: 05.12.2000
(51) Int. Cl.: F16L 41/00

(54) **DEVICE FOR DISTRIBUTION IN A VENTILATION SYSTEM**
VERTEILERVORRICHTUNG IN EINEM BELÜFTUNGSSYSTEM
DISPOSITIF DE REPARTITION DANS UN SYSTEME DE VENTILATION

(30) Priority: 06.12.1999 NO 995995
(43) Date of publication of application: 04.09.2002
(73) Proprietor: Öyen, Sverre, 3142 Vestskogen (NO)
(72) Inventor: Öyen, Sverre, 3142 Vestskogen (NO)
(74) Representative: Lundquist, Lars-Olof
(86) International application number: PCT/NO2000/000414
(87) International publication number: WO 2001/040698

(56) References cited:
- AT-B- 390 661
- CH-A- 538 629
- DE-A1- 2 529 463
- GB-A- 1 265 337
- SE-B- 465 229

## Description

The present invention relates to a device for distribution in a ventilation system in accordance with the preamble of claim 1 below.

When ventilation systems are installed in buildings, ships or other structures where there is a need to change, heat or cool the air, there will be junctions where ventilation ducts cross one another, are branched or meet. A typical example of such a junction is where a main supply duct and a main return-air duct, which run parallel to one another, are to be equipped with a branch to a room which lies to the side of the main ducts. In this case, the branch duct from one of the main ducts must cross the other main duct. To do so, the branch duct is passed in a loop around the main duct that it crosses. This results in a) a labour-intensive operation where several elbows must be connected together, and b) that the branch duct projects far beyond the plane in which the main ducts lie, thereby taking up considerable installation height. In a building where headroom is already very restricted, it will be extremely difficult to obtain sufficient headroom. The whole junction must then, if possible, be moved to another site where it is less of a nuisance, and this further complicates the installation.

It will be even more complicated to install the junction if branches are to run to one room on either side of the main ducts. In that case, two ducts must be passed out of the plane of the main ducts. Often this results in the ducts assuming the form of a veritable spaghetti junction.

In order to minimise the installation height, it has been proposed that the ducts should be slightly flattened. This has been taught in documents such as SE 502376 and DE 2840746, although the last-mentioned document does in fact relate to a central heating system. However, the flattening of the ducts or pipes does not solve the basic problem since, as a rule, this technique can only be used when ducts simply cross each other, and not when there is a need to make a branch from a duct that is to cross a parallel duct. In this case, there will seldom be space to allow the branch to run out at the same level as the main ducts.

In connection with central heating systems, there are some examples of prior art where pipes that are to be branched are put together in an integral pipe distribution device. For example, CH 629883, SE 384076 and NO 1254800 describe a pipe distribution device consisting of two parallel main pipes, from which a branch pipe runs out to each side. The branch pipes from one of the main pipes runs straight through the other main pipe and vice versa. A simpler solution is proposed in AT 390 661.

However, pipe or duct distribution devices of this type involve a number of major disadvantages, especially when used in ventilation systems. When the branch duct runs straight through the main duct, the cross-section of the main duct is narrowed considerably. In ventilation systems this results in a substantial increase in the velocity of the air past the branch duct. First of all, this creates noise, and it also causes a drop in pressure which has an adverse effect on the efficiency of the ventilation system. Compressional waves may also occur, which further aggravates these problems. Even though, as taught in SE 384076 and NO 1254800, the dimension of the main ducts is increased in the vicinity of the branch ducts, noise and pressure drop problems may still arise.

Another major problem is that the two main pipes or ducts transport fluids having different temperatures. This will also be the case in a ventilation system. Therefore, in many instances there is a need to insulate ducts of different temperatures from each other. With the known duct distribution devices, this is not possible, and consequently there is a risk of energy loss.

Moreover, the known duct distribution devices have a highly complex structure. Ducts must be passed straight through the main ducts and, as a rule, welded to the main duct on either side thereof. This means that the risk of leaks is great.

Last but not least, it is now a requirement that a ventilation system should be equipped with inspection hatches, for inspection and cleaning. This is difficult to implement with the known distribution device structures.

In order to overcome the aforementioned problems and provide a distribution device of minimum installation height that is simple in structure and uncomplicated to manufacture, and at the same time is easy to install, the present invention provides a distribution device having the characteristic features of claim 1.

The distribution device according to the present invention will now be described in more detail with reference to the exemplary embodiments in the accompanying drawings, wherein:
Figure 1a is a top view of a first embodiment of the present invention;
Figure 1b shows the first embodiment of the present invention viewed from A in Figure 1a;
Figure 1c shows the first embodiment of the present invention viewed from B in Figure 1a;
Figure 2a is a top view of a second embodiment of the present invention;
Figure 2b shows the second embodiment of the present invention viewed from A in Figure 2a; and
Figure 2c shows the second embodiment of the present invention viewed from B in Figure 2a.

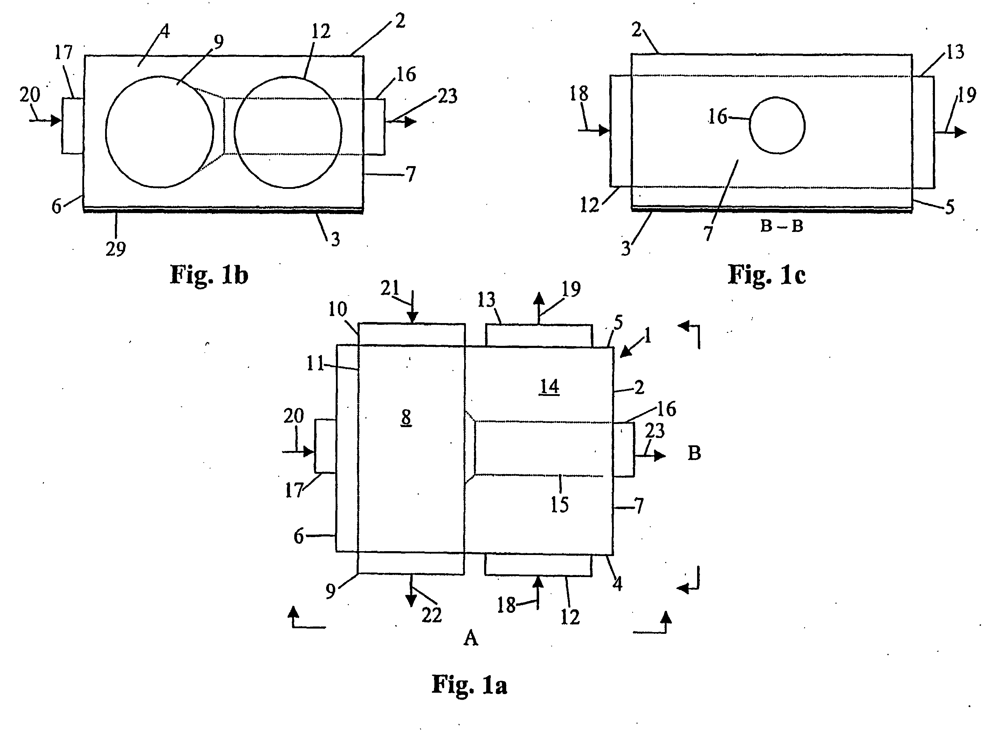

According to a first embodiment shown in Figures 1a - c, the distribution device according to the present invention consists of a hollow, generally box-shaped body 1. The body I has a top wall 2, a bottom wall 3, a front wall 4, a back wall 5, a first side wall 6 and a second side wall 7.

Through the body 1 there extends a first main duct 8, which has a first portion that projects as a first sleeve 9 through the front wall 4, a second portion that projects as a sleeve 10 through the back wall 5 and a central portion 11 that is located inside the body 1.

A third sleeve 12 is arranged next to the first sleeve 9 of the first main duct 8 on the front wall 4. A fourth sleeve 13 is arranged next to the second sleeve 10 of the first main duct 8 on the back wall 5. The sleeves 12 and 13 are arranged immediately opposite one another, and form a part of a second main duct 14. However, the main duct 14 has no central portion.

A first branch duct 15 runs sideways from the central portion 11 of the main duct 8. The branch duct 15 runs through the second side wall 7 and has a sleeve 16 on the outside of the side wall 7. The sleeve 16 has a smaller diameter than the sleeves 9, 10, 12 and 13.

A sleeve 17 is provided on the first side wall 6. The sleeve 17 has a smaller diameter than the sleeves 9, 10, 12 and 13.

The sleeve 17 communicates with the sleeves 12 and 13 via the interior cavity of the body 1. When, for example, air flows in at the arrow 18 through the sleeve 12, it flows into the interior cavity of the body I and then out through the sleeve 13 at the arrow 19. Air also flows in through the sleeve 17 at the arrow 20, for example, as return air from a room. Even though the passage between the sleeve 12 and the sleeve 13 is partly obstructed by the branch duct 15, the total cross-section will not be reduced, since, as can be seen from Figure 1b, the whole cross-section of the body 1 that is outside the central portion 11 and the branch duct 15 is available. Therefore, the air will not be subject to any appreciable change in velocity during its passage past the branch duct 15.

As can be seen from Fig. 1b, the air that flows in at the arrow 20 will flow on the upper side and the underside of the main duct 8 until it meets the air passing from the sleeve 12 to the sleeve 13.

The air that flows in at the arrow 21 through the sleeve 10 flows in part through the whole of the main duct 8 and out through the sleeve 9 at the arrow 22. However, some of the air flows through the branch duct 15 and out through the sleeve 16 at the arrow 23, for example, as fresh air to a room.

In the example given above a distribution device is described which has a side branch for supply air and a side branch for return air, one on each side of the device. However, as a rule, there will be a need for side branches for both fresh air and return air on the same side and very often on both sides, for example, when the distribution device is to be placed in a corridor which has offices on each side. Therefore, a second embodiment of the invention suitable for this use will be described below.

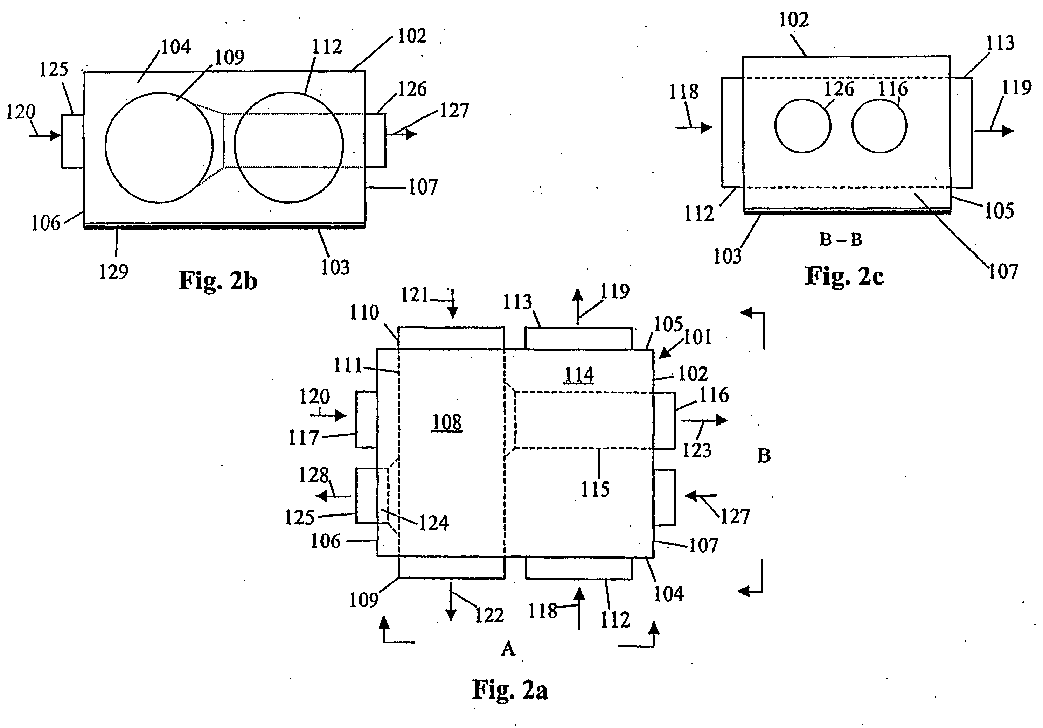

Figures 2a - c show a hollow, generally box-shaped body 101. The body 101 has a top wall 102, a bottom wall 103, a front wall 104, a back wall 105, a first side wall 106 and a second side wall 107.

Through the body 101 there runs a first main duct 108, which has a first portion that projects as a first sleeve 109 through the front wall 104, a second portion that projects as a second sleeve 110 through the back wall 105 and a central portion 111 that is located inside the body 101.

A third sleeve 112 is arranged next to the first sleeve 109 of the first main duct 108 on the front wall 104. A fourth sleeve 113 is arranged next to the second sleeve 110 of the first main duct 108 on the back wall 105. The sleeves 112 and 113 are arranged immediately opposite one another, and form a part of a second main duct 114. However, the main duct 114 does not have a central portion.

A first branch duct 115 runs sideways from the central portion 111 of the main duct 108. The branch duct 115 runs through the second side wall 107 and has a sleeve 116 on the outside of the side wall 107.

A second branch duct 124 also runs from the main duct 108. The branch duct 124 runs through the first side wall 106 and has a sleeve 125 on the outside of the side wall 106.

A sleeve 117 is arranged on the first side wall 106. A sleeve 126 is arranged on the second side wall 107.

The sleeves 116, 117, 125 and 127 have a smaller diameter than the sleeves 109, 110, 112 and 113.

The sleeve 117 communicates with the sleeves 112, 113 and 126 via the interior cavity of the body 101. When, for example, air flows in at the arrow 118 through the sleeve 112, it flows into the interior cavity of the body 101 and then out through the sleeve 113 at the arrow 119. Air also enters through the sleeve 117 at the arrow 120 and the sleeve 126 at the arrow 127, for example, as return air from a room on either side of the distribution device. Even though the passage between the sleeve 112 and the sleeve 113 is partly obstructed by the branch duct 115, the total cross-section will not be reduced; since, as can be seen from Figure 2b, the cross-section of the whole body 101 that is outside the central portion 111 and the branch duct 115 is available. Therefore, the air will not be subject to an appreciable change in velocity during its passage past the branch duct 115.

As can be seen from Fig. 2b, the air that flows in at the arrow 120 will flow on the upper side and the underside of the main duct 108 until it meets the air that passes from the sleeve 112 to the sleeve 113.

The air that flows in at the arrow 121 through the sleeve 110 flows in part through the whole main duct 108 and out through the sleeve 109 at the arrow 122. However, some of the air flows through the branch duct 115 and out through the sleeve 116 at the arrow 123, and some of the air flows through the branch duct 124 and out through the sleeve 125 at the arrow 128, for example as fresh air to a room.

A hatch 29, 129 may be provided on the underside 3, 103 of the body 1, 101. This hatch may cover the whole underside, so that it is easy to gain access, for example, in order to inspect or replace insulation around the main duct 8, 108 and the branch duct 15, 115, 124, and to clean the ventilation system.

With the present invention, it is also easy to arrange additional sleeves when there is a need for more branches. Branches for extraction of used air can easily be provided by making a new hole in the body 1, 101 and securing a sleeve in this hole, for example, on the underside of the body. In order to provide several branches for the supply of fresh air, the operation is somewhat more complicated, but nevertheless fully implementable. Holes are made in both the body 1, 101 and the main duct 8, 108. A branch duct is then secured in these holes.

Of course, the air may flow in the opposite direction through the distribution device according to the present invention. In that case, the main duct 8, 108 will function as a return duct for used air, whilst the main duct 14, 114 functions as a fresh air supply duct.

The principle of the present invention can also be used in cases where only one of the main ducts has a branch, for example in a situation where the sleeve 17 according to Figs. 1a and 1b is not present.

## Claims

1. A device for distribution in a ventilation system, comprising a first channel (8; 108) and a second channel (14; 114), where at least the first channel (8, 108) has at least one branch (15; 115, 124), a hollow body (1, 101), which with a plurality of walls (2, 3, 4, 5, 6, 7; 102, 103, 104, 105, 106, 107) surrounding a part of the first channel (8; 108) and the branch (15; 115), and where the second channel (14; 114) communicates openly with the interior of the hollow body (1,101), **characterised in that** the hollow body (1; 101) is equipped with a hatch (29; 129) in one of its walls (3; 103).

2. A distribution device according to claim 1, **characterised in that** the first channel (8, 108) runs as a first duct (11) through the hollow body and that the branch (15; 115) is a second duct that runs from the first duct (11; 111) and out through the wall (7; 107) of the hollow body (1; 101).

3. A distribution device according to claim 2, **characterised in that** it comprises a third duct (124), which runs from the first duct (111) and out through the wall (106) of the hollow body (101) in a different direction than the second duct (115).

4. A distribution device according to claim 1,2 or 3, **characterised in that** the second channel comprises a first sleeve (12; 112) arranged on one of the walls (4; 104) of the hollow body (1; 101) and a second sleeve (13; 113) arranged on one of the walls (5; 105) of the hollow body (1; 101), and that each of the sleeves (12; 112, 13; 113) communicates with the whole interior of the hollow body (1; 101).

5. A distribution device according to claim 4, **characterised in that** a third sleeve (17; 117) is arranged on one of the walls of the hollow body (1; 101) and that the third sleeve (17; 117) communicates with the whole interior of the hollow body (1; 101).

6. A distribution device according to claim 5, **characterised in that** a fourth sleeve (126) is arranged on one of the walls of the hollow body (101) and that the fourth sleeve (126) communicates with the whole interior of the hollow body (101).

7. A distribution device according to one of claims 4 - 6, **characterised in that** the free cross-sectional area of the hollow body (1; 101) transverse to the first duct (11; 111) at the second duct (15; 115) is at least equivalent to the cross-sectional area of the first sleeve (12; 112) or the second sleeve (13; 113).

8. A distribution device according to one of claims 2 - 7, **characterised in that** the first duct (11, 111) and the second duct (15; 115, 124) are equipped with a layer of thermal insulation.

9. A distribution device according to one of claims 2 - 8, **characterised in that** the free cross-sectional area of the hollow body (1; 101) along the longitudinal axis of the first duct (11; 111) is at least equivalent to the cross-sectional area of the third sleeve (117).

## Patentansprüche

1. Vorrichtung zum Verteilen in einem Ventilationssystem, umfassend einen ersten Kanal (8; 108) und einen zweiten Kanal (14; 114), wobei wenigstens der erste Kanal (8, 108) wenigstens einen Zweig (15; 115, 124) hat, einen Hohlkörper (1, 101), der mit einer Mehrzahl von Wänden (2, 3, 4, 5, 6, 7; 102, 103, 104, 105, 106, 107) einen Teil des ersten Kanals (8; 108) und den Zweig (15; 115) umgibt, und wobei der zweite Kanal (14; 114) offen mit dem Innern des Hohlkörpers (1, 101) in Verbindung steht, **dadurch gekennzeichnet, dass** der Hohlkörper (1; 101) in einer der Wände (3; 103) mit einer Klappe (29, 129) ausgestattet ist.

2. Verteilungsvorrichtung nach Anspruch 1, **dadurch gekennzeichnet, dass** der erste Kanal (8, 108) als ein erstes Rohr (11) durch den Hohlkörper verläuft und dass der Zweig (15; 115) ein zweites Rohr ist, das von dem ersten Rohr (11; 111) und durch die Wand (7; 107) des Hohlkörpers (1; 101) nach außen verläuft.

3. Verteilungsvorrichtung nach Anspruch 2, **dadurch gekennzeichnet, dass** sie ein drittes Rohr (124) umfasst, das von dem ersten Rohr (111) und nach außen durch die Wand (106) des Hohlkörpers (101) in einer anderen Richtung verläuft als das zweite Rohr (115).

4. Verteilungsvorrichtung nach Anspruch 1, 2 oder 3, **dadurch gekennzeichnet, dass** der zweite Kanal eine erste Muffe (12; 112), die an einer der Wände (4; 104) des Hohlkörpers (1; 101) angeordnet ist, und eine zweite Muffe (13; 113) umfasst, die an einer der Wände (5; 105) des Hohlkörpers (1; 101) verläuft, und dass jede der Muffen (12; 112, 13;113) mit dem gesamten Inneren des Hohlkörpers (1; 101) in Verbindung steht.

5. Verteilungsvorrichtung nach Anspruch 4, **dadurch gekennzeichnet, dass** eine dritte Muffe (17; 117) an einer der Wände des Hohlkörpers (1; 101) angeordnet ist und dass die dritte Muffe (17; 117) mit dem gesamten Inneren des Hohlkörpers (1; 101) in Verbindung steht.

6. Verteilungsvorrichtung nach Anspruch 5, **dadurch gekennzeichnet, dass** eine vierte Muffe (126) an einer der Wände des Hohlkörpers (101) angeordnet ist und dass die vierte Muffe (26) mit dem gesamten Inneren des Hohlkörpers (101) in Verbindung steht.

7. Verteilungsvorrichtung nach einem der Ansprüche 4-6, **dadurch gekennzeichnet, dass** der freie Querschnittsbereich des Hohlkörpers (1; 101) transversal zu dem ersten Rohr (11; 111) an dem zweiten Rohr (15; 115) wenigstens äquivalent zum Querschnittsbereich der ersten Muffe (12; 112) oder der zweiten Muffe (13; 113) ist.

8. Verteilungsvorrichtung nach einem der Ansprüche 2-7, **dadurch gekennzeichnet, dass** das erste Rohr (11, 111) und das zweite Rohr (15; 115, 124) mit einer Wärmeisolationsschicht ausgestattet sind.

9. Verteilungsvorrichtung nach einem der Ansprüche 2-8, **dadurch gekennzeichnet, dass** der freie Querschnittsbereich des Hohlkörpers (1; 101) entlang der Längsachse des ersten Rohrs (11; 111) wenigstens äquivalent zum Querschnittsbereich der dritten Muffe (117) ist.

## Revendications

1. Dispositif de distribution dans un système de ventilation, comportant un premier canal (8 ; 108) et un deuxième canal (14 ; 114), dans lequel au moins le premier canal (8 ; 108) a au moins une bifurcation (15 ; 115, 124), un corps creux (1, 101), qui est muni d'une pluralité de parois (2, 3, 4, 5, 6, 7 ; 102, 103, 104, 105, 106, 107) entourant une partie du premier canal (8 ; 108) et la bifurcation (15 ; 115), et dans lequel le deuxième canal (14; 114) communique de manière ouverte avec l'intérieur du corps creux (1 ; 101), **caractérisé en ce que** le corps creux (1 ; 101) est équipé d'une trappe (29 ; 129) dans l'une de ses parois (3 ; 103).

2. Dispositif de distribution selon la revendication 1, **caractérisé en ce que** le premier canal (8 ; 108) s'étend sous forme de premier conduit (11) à travers le corps creux et **en ce que** la bifurcation (15 ; 115) est un deuxième conduit qui s'étend à partir du premier conduit (11 ; 111) et sort à travers la paroi (7 ; 107) du corps creux (1 ; 101).

3. Dispositif de distribution selon la revendication 2, **caractérisé en ce qu'**il comporte un troisième conduit (124) qui s'étend à partir du premier conduit (111) et sort à travers la paroi (106) du corps creux (101) dans une direction différente de celle du deuxième conduit (115).

4. Dispositif de distribution selon la revendication 1, 2 ou 3, **caractérisé en ce que** le deuxième canal comporte une première gaine (12 ; 112) agencée sur l'une des parois (4 ; 104) du corps creux (1 ; 101) et une deuxième gaine (13 ; 113) agencée sur l'une des parois (5 ; 105) du corps creux (1 ; 101), et **en ce que** chacune des chemises (12 ; 112, 13 ; 113) communique avec tout l'intérieur du corps creux (1 ; 101).

5. Dispositif de distribution selon la revendication 4, **caractérisé en ce qu'**une troisième gaine (17 ; 117) est agencée sur l'une des parois du corps creux (1 ; 101) et **en ce que** la troisième gaine (17 ; 117) communique avec tout l'intérieur du corps creux (1 ; 101).

6. Dispositif de distribution selon la revendication 5, **caractérisé en ce qu'**une quatrième gaine (126) est agencée sur l'une des parois du corps creux (101) et **en ce que** la quatrième gaine (126) communique avec tout l'intérieur du corps creux (101).

7. Dispositif de distribution selon l'une des revendications 4 à 6, **caractérisé en ce que** la surface libre en coupe transversale du corps creux (1 ; 101) transversale au premier conduit (11 ; 111) au niveau du deuxième conduit (15 ; 115) est au moins équivalente à la surface en coupe transversale de la première gaine (12 ; 112) ou de la deuxième gaine (13 ; 113).

8. Dispositif de distribution selon l'une des revendications 2 à 7, **caractérisé en ce que** le premier conduit (11, 111) et le deuxième conduit (15 ; 115, 124) sont équipés d'une couche d'isolation thermique.

9. Dispositif de distribution selon l'une des revendications 2 à 8, **caractérisé en ce que** la surface libre en coupe transversale du corps creux (1 ; 101) le long de l'axe longitudinal du premier conduit (11 ; 111) est au moins équivalente à la surface en coupe transversale de la troisième gaine (117).
